# EUROPÄISCHE PATENTANMELDUNG

(11) **EP 0 597 562 A1**
(43) Veröffentlichungstag der Anmeldung: **18.05.1994**
(21) Anmeldenummer: 93250305.5
(22) Anmeldetag: 08.11.1993
(51) Int. Cl.: G02B 6/42

(54) **Kopplungs-Modul**

(30) Priorität: 09.11.1992 DE 4238203
(71) Anmelder: SIEMENS AKTIENGESELLSCHAFT, D-80333 München (DE)
(72) Erfinder: Kropp, Jörg-R., Dr., D-12355 Berlin (DE)

(57) **Zusammenfassung**

Das Kopplungs-Modul enthält eine Anschluß-Lichtleitfaser (1), deren erste Endfläche (3) über ein lichtleitendes Koppelelement (4) optisch mit mindestens zwei elektrooptischen Komponenten (5,6) gekoppelt ist. Um das Kopplungs-Modul mit möglichst wenigen Bauteilen und äußerst kompakt aufbauen zu können, weist das Koppelelement (4) eine Auflagenfläche (11) auf, die auf die Endfläche (3) aufgebracht ist. Mindestens eine Grenzfläche (12) und eine Koppelfläche (13) des Koppelelements (4) sind derart in bezug auf die Auflagefläche (11) angeordnet, daß durch die Auflagefläche (11) eintretendes Licht (14) das Koppelelement (4) bis zur Grenzfläche (12) durchläuft und dort teilweise ausgekoppelt wird und teilweise auf die Koppelfläche (13) weitergelenkt wird. Die Komponenten sind auf die Grenzfläche (12) und die Koppelfläche (13) optisch ausgerichtet.

## Beschreibung

Die Erfindung betrifft ein Kopplungs-Modul mit einer Anschluß-Lichtleitfaser, deren erste Endfläche über ein lichtleitendes Koppelelement optisch mit mindestens zwei elektro-optischen Komponenten gekoppelt ist, wobei der Lichtstrahlengang zwischen der Anschluß-Lichtleitfaser und dem Koppelelement frei von fokussierenden Elementen ist.

Bei einem derartigen bekannten (EP-A1-0 463 214) Kopplungs-Modul für eine bidirektionale optische Signal übertragung ist eine Anschluß-Lichtleitfaser mit einer ersten Endfläche einer Kugellinse zugewandt. Die Kugellinse fokussiert aus der Anschluß-Lichtleitfaser austretendes Licht auf eine im spitzen Winkel zur Endfläche verlaufende und erheblich beabstandete Oberfläche eines als Strahlteiler ausgebildeten lichtleitenden Koppelelements. Diese Oberfläche lenkt das Licht auf eine elektro-optische Komponente in Form eines Lichtempfängers rechtwinklig ab. In axialer Flucht zur Anschluß-Lichtleitfaser ist hinter dem Strahlteiler eine weitere elektro-optische Komponente in Form eines Lichtsenders angeordnet, dessen emittiertes Licht über den Strahlteiler und die Kugellinse in die Anschluß-Lichtleitfaser einkoppelbar ist.

Der Strahlteiler kann wellenlängsselektiv oder mit einem vorgegebenen Trennungsverhalten arbeiten und ist an einer Hülse gehalten, in deren Bohrung die Kugellinse eingepreßt ist. Um störende Rückkoppelwirkungen auf die Komponenten zu vermeiden, ist die Endfläche der Anschluß-Lichtleitfaser geschrägt, so daß zu einer optimalen Kopplung auch die optischen Elemente in entsprechenden Winkeln zur Anschluß-Lichtleitfaserachse ausgerichtet werden müssen.

Das bekannte Kopplungs-Modul besteht aus verhältnismäßig vielen einzelnen Bauteilen, die präzise in aufwendigen Fertigungsschritten zueinander justiert und fixiert werden müssen. Das bekannte Kopplungs-Modul erfordert aufgrund der erheblich beabstandeten Bauteile ein vergleichsweise großes Bauvolumen.

Es ist zwar grundsätzlich bekannt (DE-A1-38 09 396), ein Silizium-Substrat mit präzise eingearbeiteten V-förmigen Nuten zur Positionierung von einer Anschluß-Lichtleitfaser in bezug auf elektro-optische Komponenten zu verwenden. Auch dies ist vergleichsweise fertigungsaufwendig.

Der Erfindung liegt daher die Aufgabe zugrunde, zur Verringerung des Herstellungswands und des Raumbedarfs ein besonders kompakt ausgebildetes Kopplungsmodul mit möglichst wenig Einzelbauteilen zu schaffen.

Diese Aufgabe wird erfindungsgemäß bei einem Kopplungs-Modul der eingangs genannten Art dadurch gelöst, daß das Koppelelement eine vorzugsweise ebene Auflagefläche, mindestens eine Grenzfläche und eine Koppelfläche aufweist, die so zueinander angeordnet sind, daß durch die Auflagefläche eintretendes Licht das Koppelelement bis zur Grenzfläche durchläuft und dort teilweise austritt und teilweise zur Koppelfläche weitergelenkt wird, daß die Auflagefläche auf der Endfläche aufgebracht und mit dieser verbunden ist und daß eine Komponente auf die Grenzfläche und eine Komponente auf die Koppelfläche ausgerichtet ist. Das Licht kann auch mittelbar über wenigstens eine Reflexionsfläche zur Koppelfläche weitergelenkt werden.

Ein wesentlicher Vorteil des erfindungsgemäßen Kopplungs-Moduls besteht aufgrund der direkten räumlichen Nähe zwischen dem Koppelelement und der Endfläche der Anschluß-Lichtleitfaser in einem erheblich verminderten Raumbedarf. Das Koppelelement kann vorab mit der Anschluß-Lichtleitfaser zu einem einstückigen Bauteil verbunden werden, das während der Fertigung leicht handhabbar und beschädigungsunanfällig ist. Ein weiterer Vorteil besteht darin, daß eine präzise Justage des Koppelelementes in den in der Ebene der Auflagefläche liegenden Orthogonalrichtungen (X-Y-Achse) in einem weiten Toleranzbereich nicht notwendig ist. Das nicht von der Grenzfläche in das Koppelelement reflektierte, sondern aus der Grenzfläche austretende Licht ist aufgrund der erreichbaren räumlichen Nähe der Grenzfläche zu einer Komponente (insbesondere zu einem Lichtempfänger) ohne weitere Optiken unmittelbar auf eine Wirkfläche koppelbar, die der numerischen Apertur des aus der Grenzfläche austretenden Lichtstrahls angepaßt ist. Auch die zweite elektro-optische Komponente kann ohne Zwischenschaltung weiterer z. B. fokussierender Elemente unmittelbar mit der Koppelfläche optisch gekoppelt sein. Durch die unmittelbare Anordnung der Auflagefläche an der Endfläche der Anschluß-Lichtleitfaser und die unmittelbare Kopplung zu den elektro-optischen Komponenten wird ein mechanisch sehr stabiles und hinsichtlich Temperatur-Schwankungen unempfindliches Kopplungs-Modul mit vergleichsweise wenig Einzelbauteilen geschaffen.

Eine vorteilhafte Fortbildung der Erfindung besteht darin, daß das Koppelelement eine weitere Grenzfläche aufweist, an der das durch die Auflagefläche eintretende und von der ersten Grenzfläche weitergelenkte Licht teilweise austritt und teilweise auf die Koppelfläche weitergelenkt wird, und daß eine weitere elektro-optische Komponente auf die zweite Grenzfläche zur optischen Kopplung ausgerichtet ist. Diese Ausgestaltung erlaubt eine aufwandsarme Erweiterung des erfindungsgemäßen Kopplungs-Moduls auf die Ankopplung von drei elektro-optischen Komponenten, wobei an jeder Grenzfläche ein durch die Grenzflächenbeschaffenheit festlegbarer Anteil von Licht auskoppelbar bzw. auf die Koppelfläche weiterlenkbar ist.

Auch wenn die Anordnung der optisch wirksamen Flächen des Koppelelements bezüglich durch die Auflagefläche in das Koppelelement eintretendes Licht angegeben ist, ist selbstverständlich unter Umkehr der Strahllaufrichtung von elektro-optischen Komponenten emittiertes Licht über die Koppelfläche und/oder die mindestens eine Grenzfläche in die Anschluß-Lichtleitfaser entsprechend einkoppelbar. Die Grenzfläche kann als teildurchlässiger Spiegel ausgebildet sein und von zwei Sendern (z. B. Laserdioden) emittierte Lichtsignale in die Anschluß-Lichtleitfaser eingekoppelt werden.

Um die hohe Übertragungskapazität von Lichtwellenleitern auszunutzen, können mehrere optische Wellenlängen gleichzeitig über die Anschluß-Lichtleitfaser übertragen werden. Dazu ist gemäß einer vorteilhaften Ausgestaltung der Erfindung vorgesehen, daß die Koppelfläche und/oder die Grenzfläche oder die Grenzflächen von einer wellenlängenselektiven Beschichtung gebildet sind und daß die Komponenten ein entsprechend abgestimmtes wellenlängenselektives Verhalten aufweisen. Zur selektiven Trennung auszukoppelnder polarisierter Lichtsignale können auch auf der Grenzfläche bzw. der Koppelfläche angeordnete Polarisationsfilter verwendet werden.

Um das Koppelelement besonders einfach auf die Endfläche der Anschluß-Lichtleitfaser aufbringen zu können, ist gemäß einer vorteilhaften Weiterbildung der Erfindung vorgesehen, daß die Anschluß-Lichtleitfaser in einem Steckerstift mit vorzugsweise plangeschliffener Stirnseite gehalten ist und daß die Auflagefläche mit der Stirnfläche verbunden ist. Der Steckerstift kann so ausgebildet sein, daß die zweite Endfläche der Anschluß-Lichtleitfaser zur Ankopplung an einen weiteren Steckerstift ausgebildet ist. An den Steckerstift mit der Anschluß-Lichtleitfaser kann sich aber auch ein Kabelmantel anschließen, der die Anschluß-Lichtleitfaser aufnimmt und zu einer korrespondierenden Einrichtung führt.

Eine hinsichtlich der Begrenzung von Kopplungsverlusten und Reflexionseffekten besonders bevorzugte Ausgestaltung der Erfindung besteht darin, daß der Brechungsindex des Koppelelements dem Brechungsindex des lichtführenden Kanals der Anschluß-Lichtleitfaser entspricht.

Fertigungstechnisch ist es besonders vorteilhaft, wenn die Auflagefläche mittels eines Klebers auf die Endfläche aufgebracht ist, dessen Brechungsindex dem Brechungsindex des Koppelelements entspricht.

Bevorzugt kann die Anschluß-Lichtleitfaser in einem Aufnahmeteil gehalten sein, das an einem Gehäuse mittels Ringnaht-Buckelschweißung gehalten ist. Vorzugsweise sind auch die Komponenten - ggf. in entsprechenden Aufnahmen - mittels Ringnaht-Buckelschweißung an dem Gehäuse gehalten.

Eine vom Aufbau besonders einfache und fertigungstechnisch besonders vorteilhafte weitere Ausgestaltung des erfindungsgemäßen Kopplungs-Moduls sieht vor, daß das Koppelelement als Prisma ausgebildet ist und daß die Auflagefläche, die Grenzfläche und die Koppelfläche Seitenflächen des Prismas sind.

Die Erfindung wird nachfolgend anhand einer Zeichnung näher erläutert. Es zeigen:
Figur 1 ein Ausführungsbeispiel eines erfindungsgemäßen Kopplungs-Moduls,
Figur 2 ein Koppelelement des erfindungsgemäßen Kopplungs-Moduls und
Figur 3 ein weiteres Ausführungsbeispiel des erfindungsgemäßen Kopplungs-Moduls.

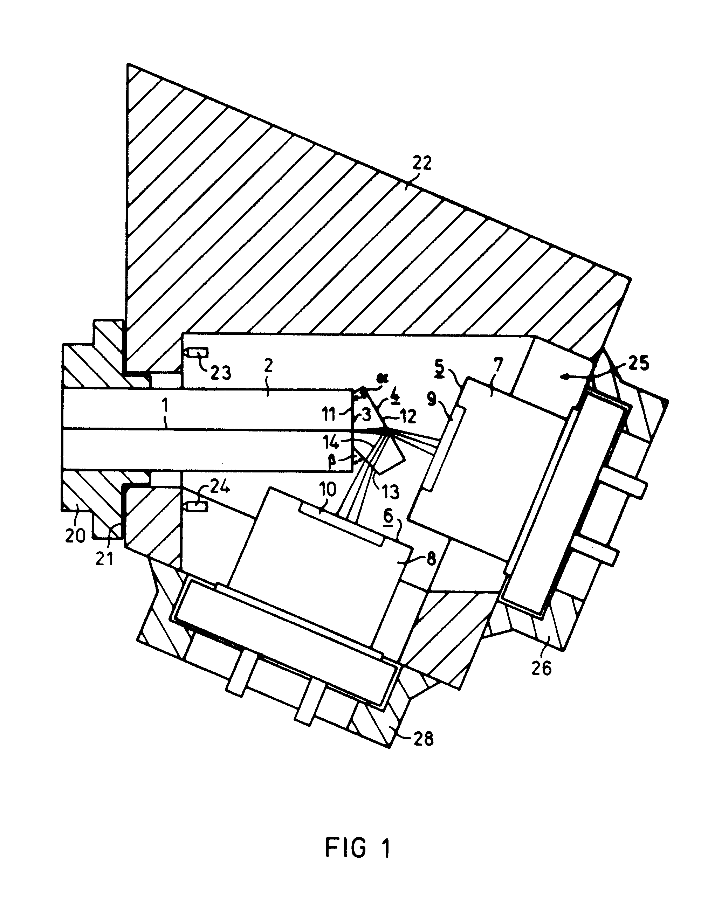

Figur 1 zeigt in vergrößerter Darstellung ein Kopplungs-Modul mit einer Anschluß-Lichtleitfaser 1, die in einem Steckerstift 2 zentrisch gehalten ist. Ihre erste Endfläche 3 ist über ein lichtleitendes Koppelelement 4 optisch mit zwei elektro-optischen Komponenten 5, 6 gekoppelt. Die elektro-optischen Komponenten sind in an sich bekannter Weise (EP-A1-0 463 214) als eigenständige Bauelemente mit jeweils einer hermetisch dichten Einkapselung 7, 8 ausgebildet, die jeweils ein Planfenster 9, 10 aufweist.

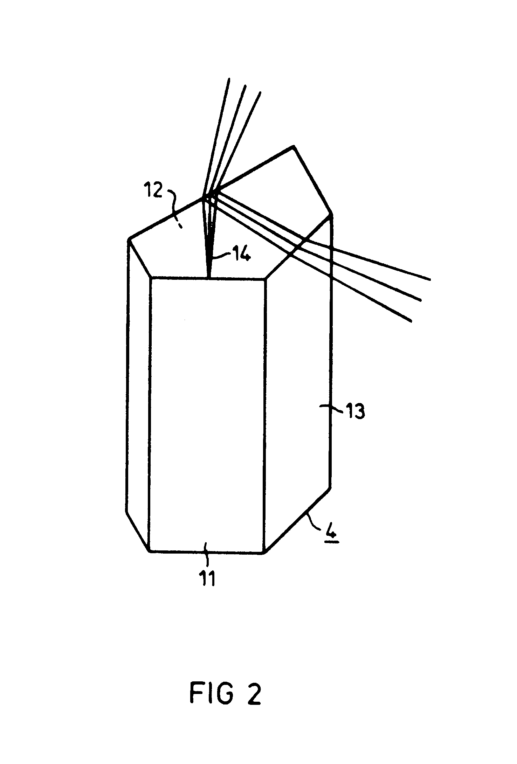

Das in Figur 2 detailliert und sehr stark vergrößert dargestellte Koppelelement 4 ist als Prisma ausgebildet. Eine erste Seitenfläche bildet eine ebene Auflagefläche 11, eine weitere Seitenfläche bildet eine Grenzfläche 12 und eine weitere Seitenfläche bildet eine Koppelfläche 13. Die Flächen 11, 12 und 13 sind derart zueinander angeordnet, daß durch die Auflagefläche 11 (in den Figuren 1 und 2 andeutungsweise dargestelltes) eintretendes Licht 14 das Koppelelement 4 bis zur Grenzfläche 12 durchlaufen, dort teilweise austreten und teilweise innerhalb des Koppelelements 4 auf die Koppelfläche 13 weitergelenkt werden würde. Es ist vorteilhaft, wenn die Auflagefläche 12 plangegeschliffen und/oder poliert ist, so daß sich eine besonders gute Kopplung mit der Endfläche 3 (Figur 1) ergibt. Die Koppelfläche 13 kann auch gekrümmt ausgebildet sein. Auf der Grenzfläche 12 kann ein konvexes Element aufgebracht sein.

Die Grenzfläche 12 kann als teildurchlässiger Spiegel ausgebildet sein. In dem in Figur 1 dargestellten Ausführungsbeispiel sind die Grenzfläche 12 und die Koppelfläche 13 von einer wellenlängenselektiven Beschichtung gebildet, so daß nur Lichtsignale mit einer entsprechenden Wellenlänge aus der Grenzfläche 12 in Richtung auf die Komponente 5 austreten, während andere Wellenlängen auf die Koppelfläche 13 treffen und (ggf. wellenlängenselektiert) aus dieser austretend zur Komponente 6 gelangen. Die Komponente 5 ist als Lichtempfänger und die Komponente 6 als Lichtsender (Laserdiode) ausgebildet. In Umkehrung des zur Definition der Anordnung der optischen Wirkflächen bisher beschriebenen Lichtstrahlenganges wird also von der Komponente 6 emittiertes Licht durch die Koppelfläche 13 eingekoppelt und über die Grenzfläche 12 auf die Endfläche 3 geleitet.

Der Steckerstift 2 ist in einer Halterung 20 befestigt, die mittels einer Ringnaht-Buckelschweißung 21 mit einem Gehäuse 22 verbunden ist. Zur Herstellung der Schweißung greifen andeutungsweise dargestellte Schweißelektroden 23 und 24 durch eine Öffnung 25. Die in einer Halterung 26 gehaltene Komponente 5 wird durch Lichtbeaufschlagung der Anschluß-Lichtleitfaser 1 in bezug auf die Grenzfläche 12 ausgerichtet und - vorzugsweise durch Ringnaht-Buckelschweißung - fixiert. In entsprechender Weise wird die in einer weiteren Halterung 28 gehaltene Komponente 6 in bezug auf die Koppelfläche 13 ausgerichtet und fixiert.

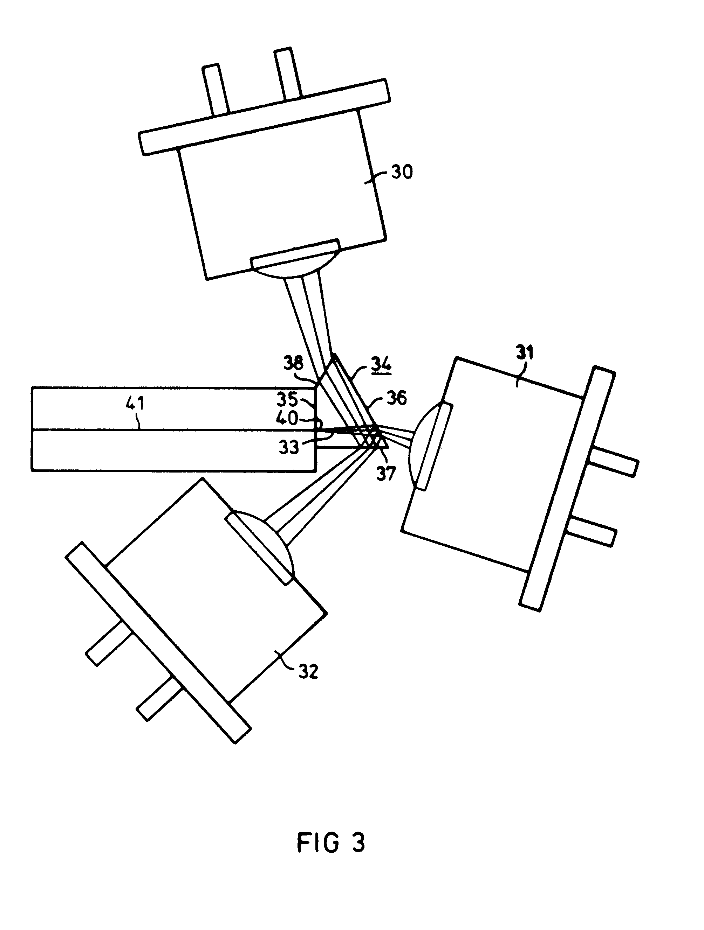

Figur 3 zeigt schematisch die Anordnung von drei elektrooptischen Komponenten 30, 31 und 32 in bezug auf ein Koppelelement 34, das eine Auflagefläche 35, eine erste Grenzfläche 36, eine zweite Grenzfläche 37 und eine Koppelfläche 38 aufweist. Die Koppelfläche 38 und die Grenzflächen 36 und 37 können bedarfsweise von einer wellenlängenselektiven Beschichtung gebildet sein. Die Komponenten 30, 31 und 32 können ein entsprechend abgestimmtes wellenlängenselektives Verhalten aufweisen. Wenn von einer Endfläche 40 einer Anschluß-Lichtleitfaser 41 über die Auflagefläche 35 in das Koppelelement 34 Licht 33 eintreten würde, würde dies von der ersten Grenzfläche 36 wellenlängenselektiv in Richtung auf die entsprechend ausgerichtete Komponente 31 ausgekoppelt werden, während andere Wellenlängen auf die zweite Grenzfläche 37 abgelenkt werden würden. Dort würde in entsprechender Weise wellenlängenselektiv Licht auf die Komponente 32 ausgekoppelt, während teilweise Licht in Richtung auf die Koppelfläche 38 ausgekoppelt werden würde. Durch die Koppelfläche 38 austretendes Licht würde die Komponente 30 beaufschlagen. Zur Vereinfachung der Darstellung zeigt Figur 3 das im Zusammenhang mit der Figur 1 ausführlich beschriebene Gehäuse und die entsprechenden Halterungen und Aufnahmen für die Bauteile nicht. In (teilweiser) Umkehr der optischen Strahlführung können die Komponenten 30, 31 und 32 auch alle (oder teilweise) lichtemittierende Komponenten sein, so daß wellenlängenselektiv Licht über das Koppelelement 34 in die Anschluß-Lichtleitfaser einkoppelbar ist. Das Koppelelement 34 ist auf die Auflagefläche 35 mittels eines Klebers aufgebracht, dessen Brechungsindex dem Brechungsindex des Koppelelements 34 entspricht. Der Brechungsindex des Koppelelements 34 ist auf den Brechungsindex des lichtführenden Kanals der Anschluß-Lichtleitfaser 41 abgestimmt.

Das erfindungsgemäße Kopplungs-Modul zeichnet sich durch einen äußerst geringen Raumbedarf aus, weil die Kopplung der Komponenten mit der Anschluß-Lichtleitfaser unmittelbar über das Koppelelement erfolgen kann, ohne daß fokussierende oder strahlaufbereitende weitere optische Elemente erforderlich sind. Damit läßt sich (Figur 1) ein äußerst stabiler und kompakter Aufbau mit sehr wenig einzelnen Teilen realisieren. Das Kopplungs-Modul ist dadurch auch gegenüber Temperaturschwankungen weitgehend unempfindlich. Im wesentlichen können rotationssymmetrische optische Bauteile und stangenförmige, konfektionierbare Koppelelemente verwendet werden. Die Ausrichtung der Komponenten auf das im Gehäuse bereits fixierte Koppelelement erlaubt hohe Toleranzen hinsichtlich der Winkelgenauigkeit des Koppelelements. Das Gehäuse für das erfindungsgemäße Kopplungs-Modul kann dementsprechend einfach und klein sein. Die Justage der Bauteile zueinander ist erheblich vereinfacht, weil das Koppelelement mit der Anschluß-Lichtleitfaser bzw. dem Steckerstift bereits eine bauliche Einheit bildet und weil die Positionierung der Auflagefläche des Koppelelements parallel zur Endfläche weitgehend unkritisch ist.

Ein weiterer wesentlicher Vorteil des erfindungsgemäßen Kopplungs-Moduls besteht darin, daß die optisch wirksamen Flächen des Koppelelements nicht rechtwinklig zu der jeweiligen Lichtstrahl-Verlaufsrichtung stehen. Beispielsweise schließen die Auflagefläche 11 und die Grenzfläche 12 einen Winkel a von 30 und die Grenzfläche 12 und die Koppelfläche 13 einen Winkel β von 45 ein. Dadurch sind Rückreflexionen in die jeweilige (Sende-)Komponente weitestgehend ausgeschlossen.

## Patentansprüche

1. Kopplungs-Modul mit einer Anschluß-Lichtleitfaser (1), deren erste Endfläche (3) über ein lichtleitendes Koppelelement (4) optisch mit mindestens zwei elektro-optischen Komponenten (5,6) gekoppelt ist, wobei der Lichtstrahlengang zwischen der Anschluß-Lichtleitfaser (1) und dem Koppelelement (4) frei von fokussierenden Elementen ist,
dadurch gekennzeichnet,
- daß das Koppelelement (4) eine vorzugsweise ebene Auflagefläche (11), mindestens eine Grenzfläche (12) und eine Koppelfläche (13) aufweist, die so zueinander angeordnet sind, daß durch die Auflagefläche (11) eintretendes Licht (14) das Koppelelement (4) bis zur Grenzfläche (12) durchläuft und dort teilweise austritt und teilweise zur Koppelfläche (13) weitergelenkt wird,
- daß die Auflagefläche (11) auf der Endfläche (3) aufgebracht und mit dieser verbunden ist und
- daß eine Komponente (5) auf die Grenzfläche (12) und eine Komponente (6) auf die Koppelfläche (13) ausgerichtet ist.

2. Kopplungs-Modul nach Anspruch 1, dadurch gekennzeichnet, daß das Koppelelement (34) eine weitere Grenzfläche (37) aufweist, an der das durch die Auflagefläche (35) eintretende und von der ersten Grenzfläche (36) weitergelenkte Licht teilweise austritt und teilweise auf die Koppelfläche (38) weitergelenkt wird und daß eine weitere elektro-optische Komponente (32) auf die zweite Grenzfläche (37) zur optischen Kopplung ausgerichtet ist.

3. Kopplungs-Modul nach Anspruch 1 oder 2, dadurch gekennzeichnet, daß die Koppelfläche (13) und/oder die Grenzfläche (12) oder die Grenzflächen (36,37) von einer wellenlängenselektiven Beschichtung gebildet sind und daß die Komponenten (5,6;30, 31,32) ein entsprechend abgestimmtes wellenlängenselektives Verhalten aufweisen.

4. Kopplungs-Modul nach einem der vorangehenden Ansprüche,
dadurch gekennzeichnet, daß die Anschluß-Lichtleitfaser (1) in einem Steckerstift (2) mit vorzugsweise plangeschliffener Stirnseite gehalten ist und daß die Auflagefläche (11) mit der Stirnfläche verbunden ist.

5. Kopplungs-Modul nach einem der vorangehenden Ansprüche,
dadurch gekennzeichnet, daß der Brechungsindex des Koppelelments (4) dem Brechungsindex des lichtführenden Kanals der Anschluß-Lichtleitfaser (1) entspricht.

6. Kopplungs-Modul nach einem der vorangehenden Ansprüche,
dadurch gekennzeichnet, daß die Auflagefläche (11) auf die Endfläche (3) mittels eines Klebers aufgebracht ist, dessen Brechungsindex dem Brechungsindex des Koppelelements (4) entspricht.

7. Kopplungs-Modul nach einem der vorangehenden Ansprüche,
dadurch gekennzeichnet, daß die Komponenten (5,6) und die Anschluß-Lichtleitfaser (1) in einem Gehäuse (22) mittels Ringnaht-Bukkelschweißung (21) gehalten sind.

8. Kopplungs-Modul nach einem der vorangehenden Ansprüche,
dadurch gekennzeichnet, daß das Koppelelement (4) als Prisma ausgebildet ist und daß die Auflagefläche (11) die Grenzfläche (12) und die Koppelfläche (13) Seitenflächen des Prisma sind.
